# EUROPEAN PATENT SPECIFICATION

(11) **EP 2 266 873 B1**
(45) Date of publication and mention of the grant of the patent: **16.05.2012**
(21) Application number: 09008309.8
(22) Date of filing: 25.06.2009
(51) Int. Cl.: F16L 1/20, F16L 1/235, B63B 35/30, F16L 1/12

(54) **Fall pipe assembly and operation system**
Fallrohranordnung und Betriebssystem
Ensemble de tuyau de descente et système de fonctionnement

(43) Date of publication of application: 29.12.2010
(73) Proprietor: Ondernemingen Jan De Nul, naamloze vennootschap, 9308 Hofstade-Aalst (BE)
(72) Inventor: Lasure Koenraad, Maria Celine Antoon, 2660 Hoboken (BE)
(74) Representative: Donné, Eddy

(56) References cited:
- US-A- 4 400 115

## Description

The present invention relates to a fall pipe assembly and operation system.

More in particular, the present invention relates to a fall pipe assembly and operation system for assembling and/or disassembling a fall pipe which consists of rigid pipe pieces aligned with one another and through which rock, stone or any other material can be dumped from a vessel into deepwater and/or for use during the dumping operation itself.

According to the present state of the art the way fall pipes for dumping material in deepwater are assembled generally requires a lot of manual intervention, which slows the installation or the removal of the fall pipe down.

The amount of manual intervention is also augmenting the risk that accidents can occur.

The installation or disassembly of a fall pipe which consists of rigid pipe pieces is particularly difficult for the following reasons.

First of all, when an additional pipe piece is added to an installed part of the fall pipe, said additional pipe piece must necessarily be aligned with the upper pipe piece of the installed fall pipe part in order to be able to perform the assembly.

Indeed, in some cases the alignment ensures for example that one end of the additional pipe piece can be introduced in the open end of the upper fall pipe piece.

In other cases a flange on the additional pipe piece has to be aligned with a flange on the upper fall pipe piece in order to be able to connect said flanges for example by bolting them together.

Also when a pipe piece is removed from an installed part of a fall pipe, the upper fall pipe piece is generally only dismountable if a pulling force is applied in a direction aligned with the length of the underlying pipe piece or pieces of the fall pipe.

The above-mentioned alignment is particularly complicated since the vessel is lying at the surface of the water where the wind is blowing and waves are created.

Due to these waves on the water surface, the vessel is generally subjected to all kinds of cyclic movements with respect to the sea bottom.

Such a vessel movement can for example be a displacement of the vessel such as a heave, a sway or a surge movement, or a rotational movement such as a yaw, a pitch or a roll movement or a combination of said movements.

On the other hand, the installed fall pipe is lying deep in the water and is therefore less influenced by the water surface waves.

As a consequence, the vessel and the installed fall pipe do not move in the same way.

This discrepancy between the vessel movement and the fall pipe movement complicates very much the alignment of a pipe piece held on the vessel with an installed fall pipe part.

In the same way, it is extremely difficult to align the pulling force exerted by a crane or other hoisting device installed on the vessel with the direction of a fall pipe lying in the water in order to dismount an upper piece of it.

The existing fall pipe assembly and operation systems do not provide a good solution for this problem.

The present invention aims at a fall pipe assembly and operation system which does not show one or more of the above and possibly other disadvantages.

To this aim, the invention relates to, a fall pipe assembly and operation system for mounting and/or dismounting a fall pipe which consists of rigid pipe pieces aligned with one another, the fall pipe assembly and operation system comprising a pipe piece handling means for installing or removing pipe pieces of the fall pipe, the pipe piece handling means being at least partly installed on a motion base, which motion base is movably mounted with respect to the vessel, the movement of the motion base being controlled by a motion base control mechanism for compensating vessel movements in such a manner that during lowering of a pipe piece of the fall pipe to be installed or during hoisting of a pipe piece to be removed the pipe piece handling means on the motion base is kept by the motion base control mechanism in alignment with respect to the upper pipe piece of the fall pipe already installed regardless of at least the pitch and roll movements of the vessel.

Such a fall pipe assembly and operation system in accordance with the present invention has many advantages.

First of all, by mounting a part of the pipe piece handling means on a movable motion base, which is controlled by a motion base control mechanism for compensating movements of the vessel, it is possible to keep a pipe piece held on the vessel by said part of the pipe piece handling means aligned with the installed fall pipe part direction, so that additional pipe pieces can be easily added to an installed fall pipe part.

For the same reason a pulling force exerted by said part of the pipe piece handling means which is mounted on the motion base can be kept aligned with the fall pipe lying in the water during hoisting of a pipe piece regardless of what the movements of the vessel are, so that the disassembly of the fall pipe is also very much simplified compared to the existing systems.

As a consequence, the time required for assembling or disassembling a fall pipe is very much reduced and even so the costs related to such an installation or dismounting of a fall pipe.

According to a preferred embodiment of an assembly and operation system in accordance with the present invention said motion base control mechanism is fully automated so that the alignment of the pipe piece handling means on the motion base with the installed fall pipe can be performed without any physical intervention of a person.

It is of course not excluded from the invention and even preferred according to the invention that the tasks of the motion base control mechanism are not restricted to the control of the movements of the motion base.

The motion base control mechanism can be for example a part of a larger automated system or perform also other tasks, but this is not strictly required according to the invention.

It is clear that such a fall pipe assembly and operation system is very efficient and that the risk for injuries to working personnel is very much reduced with such a fall pipe mounting system.

According to another preferred embodiment of a fall pipe assembly and operation system in accordance with the present invention the pipe piece handling means comprise a pipe piece gripper which is mounted on a first part of the motion base, which first part is rotatable around a first axis with respect to a second part of the motion base, this second part of the motion base being rotatable around a second axis with respect to the vessel.

Generally spoken, it is preferred according to the present invention to provide the motion base with a part on which said pipe piece gripper is installed, said part having at least two rotational degrees of freedom with respect to the vessel.

However, it is not excluded according to the present invention to mount the pipe piece gripper on a part of the motion base which has more rotational degrees of freedom or which has several degrees of freedom of being displaced with respect to the vessel.

By having two rotational degrees of freedom it is possible to compensate at least the roll and pitch movement of the vessel, which are the oscillations of the vessel respectively with regard to an axis parallel to the longitudinal axis and a transverse axis which is parallel to the vessel's deck and perpendicular to said longitudinal axis.

Preferably, said first and second axes around which the first part and second part of the motion base are rotatable respectively, are perpendicular to one another.

In that way, the rotation of the first part and the rotation of the second part are clearly uncoupled, so that the motion base control mechanism does not require a high complexity.

Even more preferably said second axis is parallel with the longitudinal axis of the vessel, so that the motion of the parts of the motion base is easily related to the vessel's coordinate system.

In that manner the pitch and roll movements of the vessel can be compensated for example based on a measurement of the difference in angular velocity of the vessel and installed fall pipe around the longitudinal axis, on the one hand, and around the above-mentioned transverse axis, on the other hand.

Indeed, the results of these measurements can be easily inverted by the motion base control mechanism for controlling the corresponding parts of the motion base in order to keep the motion base aligned with respect to the installed fall pipe part and thus to compensate said rotational movements (pitch and roll movement) of the vessel.

Therefore, according to a preferred embodiment of a fall pipe assembly and operation system in accordance with the present invention said second axis is parallel to the longitudinal axis of the vessel while the rotation of the second part of the motion base around said second axis is controlled in such a way by the motion base control mechanism that the roll movement of the vessel is compensated during the afore-mentioned alignment of the pipe piece gripper and the upper pipe piece of the fall pipe.

Hereby, preferably a measurement of the difference in angular velocity between the vessel and the installed fall pipe part around its longitudinal axis (roll movement) is inverted by the motion base control mechanism, the roll movement of the vessel being compensated by the motion base control mechanism by keeping the angular velocity of the second part of the motion base around said second axis exactly equal to said inverted difference in angular velocity, at least during the aforementioned alignment of the pipe piece gripper and the upper pipe piece of the fall pipe.

According to another aspect of the invention the rotation of the first part of the motion base around the aforementioned first axis is additionally controlled in such a way by the motion base control mechanism that the pitch movement of the vessel is compensated during the aforementioned alignment of the pipe piece gripper and the upper pipe piece of the fall pipe.

Hereby, preferably a measurement of the difference in angular velocity between the vessel and the installed fall pipe part around the aforementioned transverse axis (pitch movement) is inverted by the motion base control mechanism, the pitch movement of the vessel being compensated by the motion base control mechanism by keeping the angular velocity of the second part of the motion base around said second axis exactly equal to said inverted difference in angular velocity, at least during the aforementioned alignment of the pipe piece gripper and the upper pipe piece of the fall pipe.

With the intention of better showing the characteristics of the invention, hereafter, as an example without any restrictive character whatsoever, a preferred form of embodiment of a fall pipe assembly and operation system according to the present invention, is described, with reference to the accompanying drawings, wherein:
figure 1 represents a cross-sectional view through the length of a vessel on which a fall pipe assembly and operation system according to the invention is provided;
figures 2 to 5 represent on a larger scale cross-sectional views through the width of the vessel at different positions from the front of the vessel through the fall pipe assembly and operation system, said positions respectively indicated by the lines II-II, III-III, IV-IV and V-V in figure 1;
figures 6 to 10 represent on a larger scale top views on different decks of the fall pipe assembly and operation system indicated by lines VI-VI to X-X in figure 2;
figures 11 to 14 represent on a larger scale cross-sectional views oriented in different planes parallel to the longitudinal axis of the vessel, respectively indicated by the lines XI-XI tot XIV-XIV in figure 9; and,
figure 15 represents on a larger scale a top view on a pipe piece end.

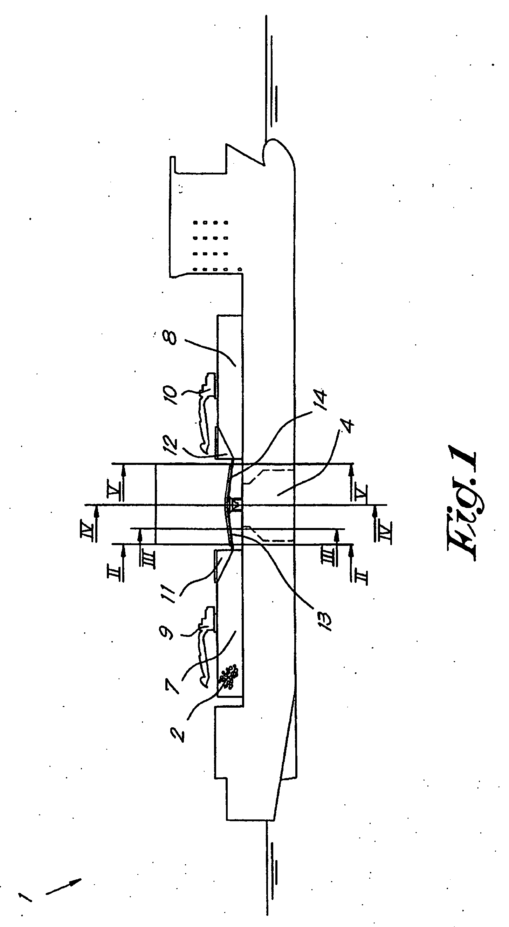

The vessel 1 represented in figure 1 is a large vessel 1 for use in deepwater of a type which is typically used in the dredging sector.

In this particular case to which the invention applies, said vessel 1 is intended for dumping stones, rocks or whatever other construction material 2 through a fall pipe 3 which is to be installed through a moon pool 4 provided in the vessel 1, for example in order to stabilise underwater foundations or pipeline beds.

As explained in the introduction, the installation of a fall pipe 3 which is composed of rigid pipe pieces 5 is rather difficult due to the movements of the vessel 1 in the water.

Therefore, the vessel 1 is equipped with an efficient fall pipe assembly and operation system 6 in accordance with the invention, which is positioned around the moon pool 4 in the vessel 1 more or less at half length of the vessel 1.

For supplying stone or rock 2 to an installed fall pipe 3, the vessel 1 is also equipped with stone handling equipment.

In particular, forward and aft the fall pipe assembly and operation system 6 stone hoppers are provided on the vessel 1, respectively forward stone hopper 7 and aft stone hopper 8, from which stones 2 can be fed to the fall pipe 3 by means of two excavators, respectively forward excavator 9 and aft excavator 10.

In particular, the excavators 9 and 10 drop the stones 2 into vibration feeders, respectively forward vibration feeder 11 and aft vibration feeder 12, positioned forward and aft the fall pipe assembly and operation system 6.

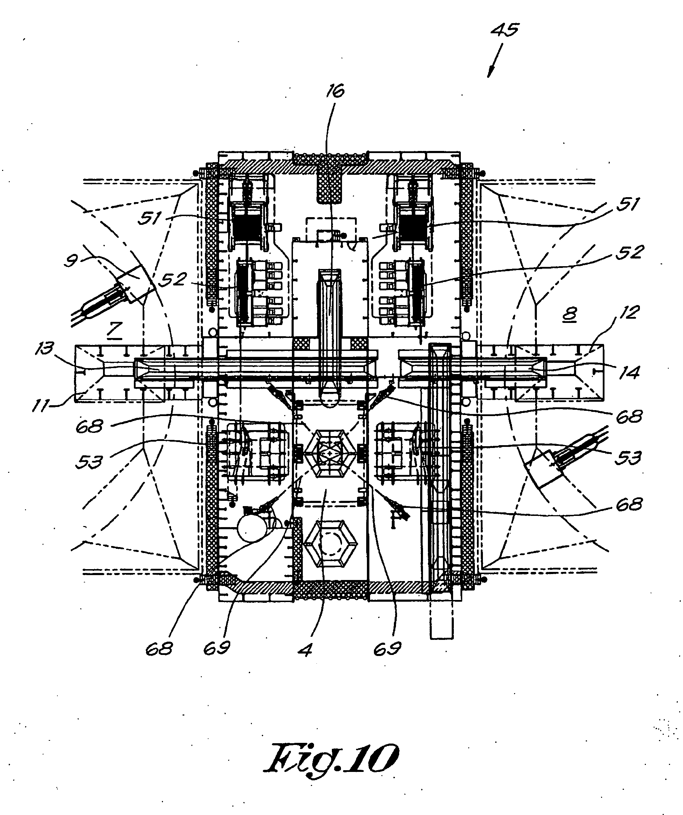

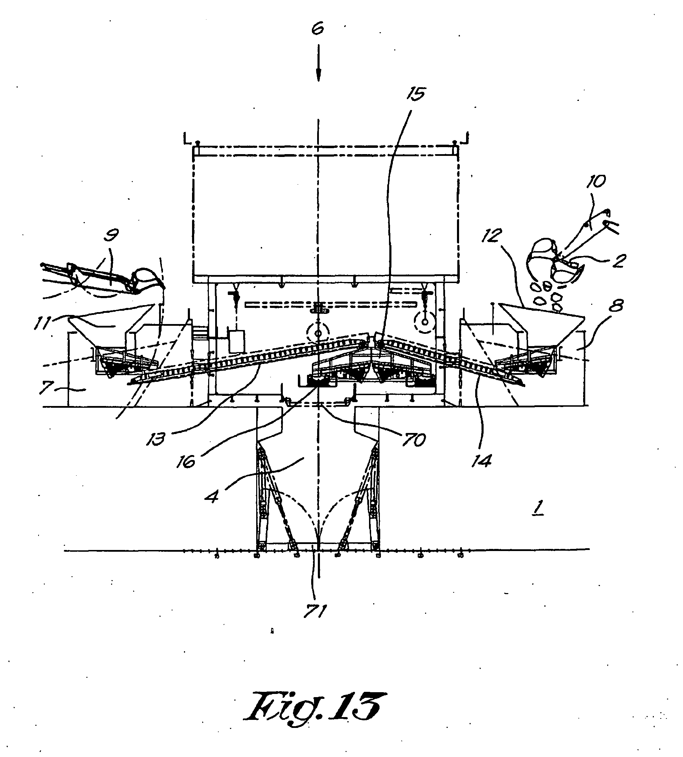

As is illustrated more in detail in figures 10, 12 and 13, the stones 2 are further transported from the vibration feeders 11 and 12 over forward conveyor belt 13 and aft conveyor belt 14 into a central feeder 15 which supplies the stones 2 to a fall pipe conveyor belt 16.

Finally, the stones 2 are dumped into the fall pipe 3, more particularly through a fall pipe chute 17, which is installed at the open input end of the fall pipe 3.

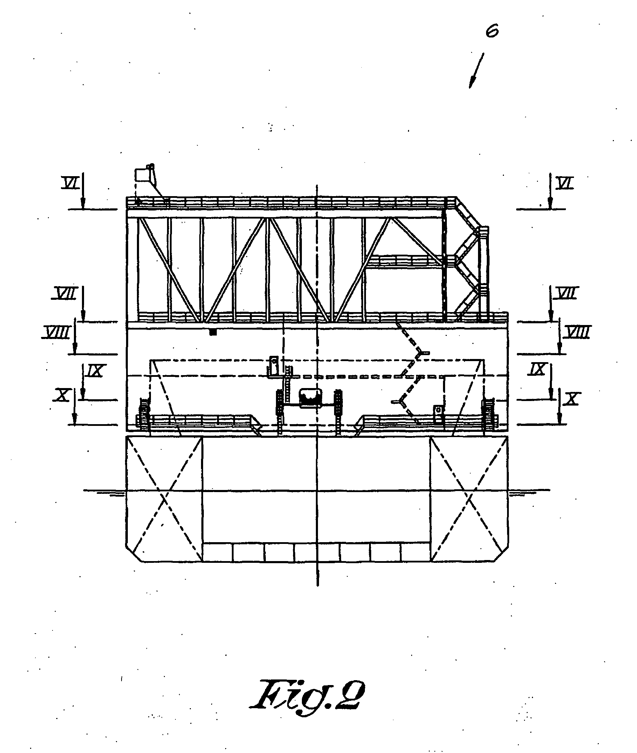

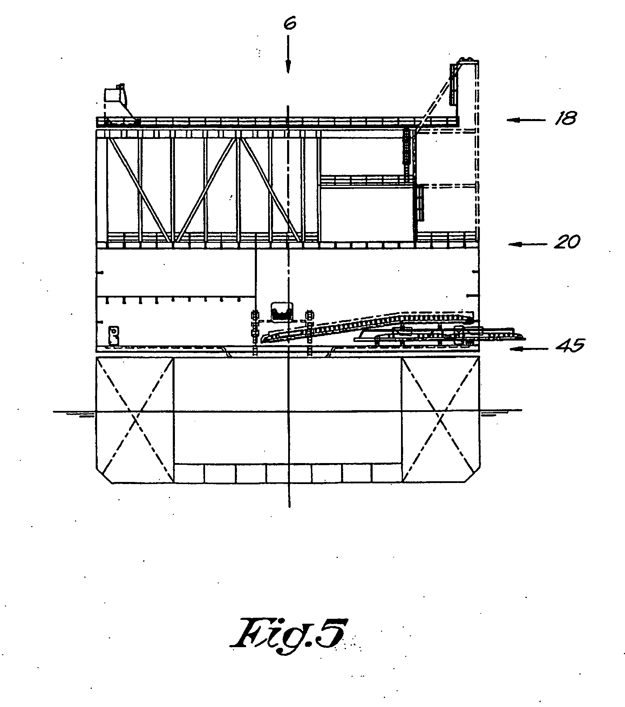

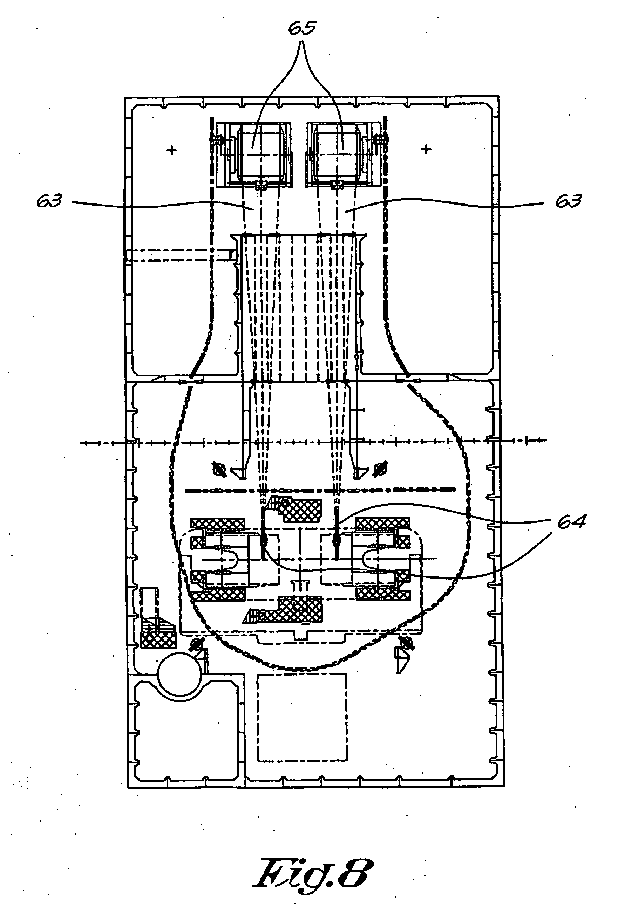

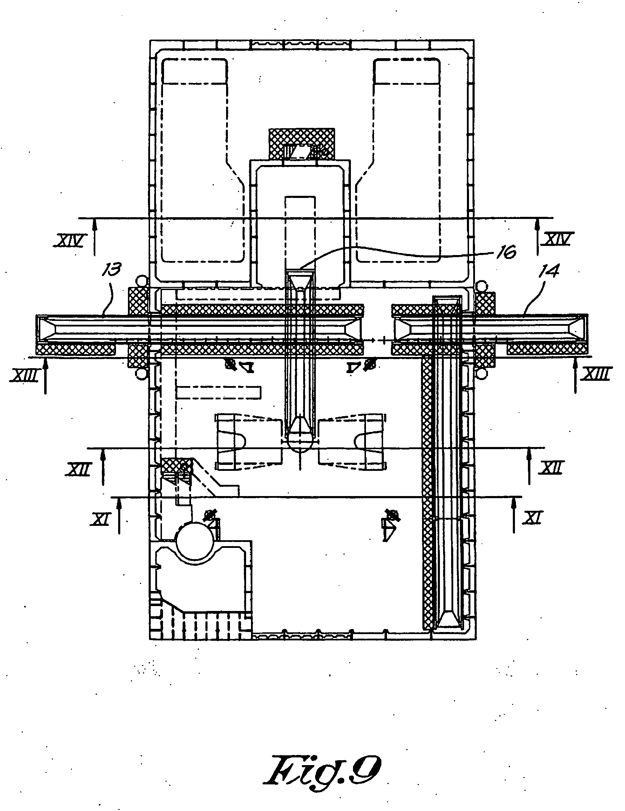

As is clearly represented in the different figures 2 to 14, the fall pipe assembly and operation system 6 itself is provided with a lot of equipment distributed over multiple decks positioned around the moon pool 4.

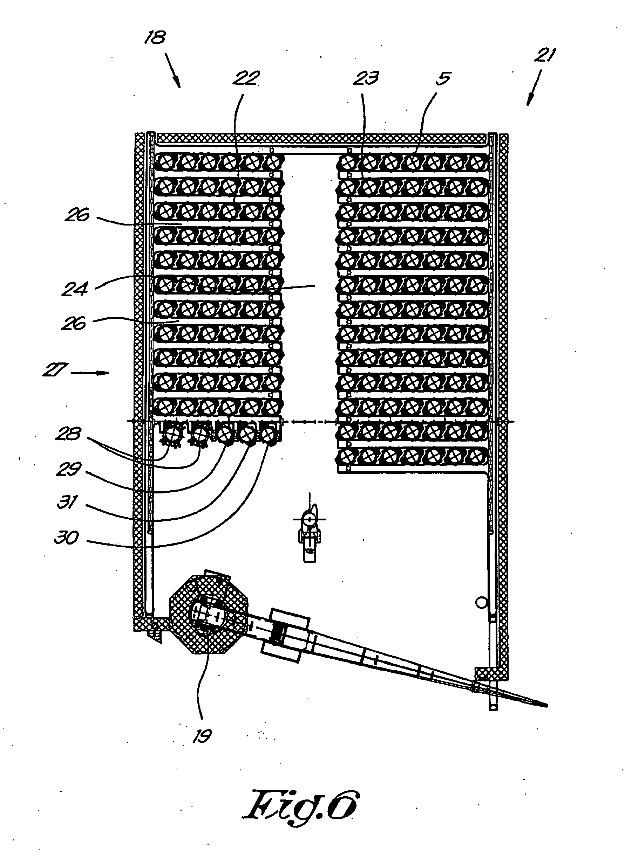

The top deck is the so-called crane deck 18, of which a top view is represented in figure 6, the crane deck 18 being provided with a crane 19 for manipulating and repositioning equipment of the fall pipe assembly and operation system 6.

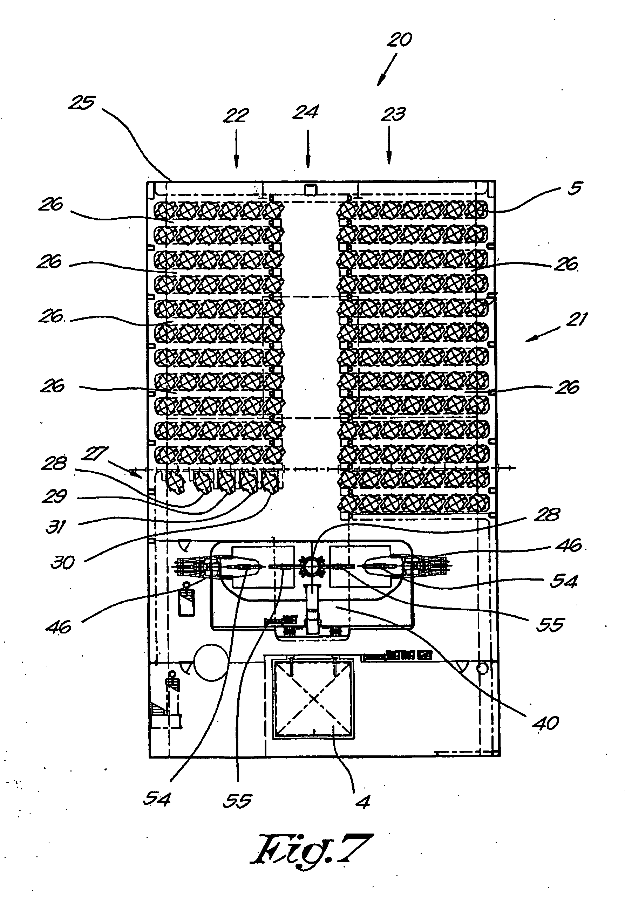

Another important deck is the so-called pipe piece handling deck 20, a top view being represented in figure 7, which pipe piece handling deck 20 is positioned at almost 12 m below the crane deck 18 corresponding to the standard maximum length L of a pipe piece 5.

On this pipe piece handling deck 20 the pipe pieces 5 of which the fall pipe 3 is to be assembled, are stored in a pipe piece stock 21 comprising two storage racks 22 and 23 positioned at both sides of a central lane 24 which is traversing the width of the pipe piece handling deck 20 from the vessel's side wall 25 to the moon pool 4 position.

The standard pipe pieces 5, having generally a length of 12 m, are stored in the storage racks 22 and 23 mainly with their length L extending in a direction AA' perpendicularly to the pipe piece handling deck 20, the pipe pieces 5 being secured between beams 26 which are parallel to the pipe piece handling deck 20 and which are extending along the vessel's length.

In this case, the storage rack 22 is near its side which is directed to the moon pool 4 also provided with some additional storage room 27 for special pipe pieces 5 which are used as top pipe pieces 5 of the fall pipe 3 in order to adapt its length according to the situation.

In particular space is provided for telescopic pipe pieces 28, and top pipe pieces 29, 30 and 31, respectively with a length of 12 m, 9 m and 6 m.

For manipulating the pipe pieces 5 during mounting and dismounting of the fall pipe 3, the pipe piece handling deck 20 is provided with pipe piece handling means 32, which is specially designed according to the present invention.

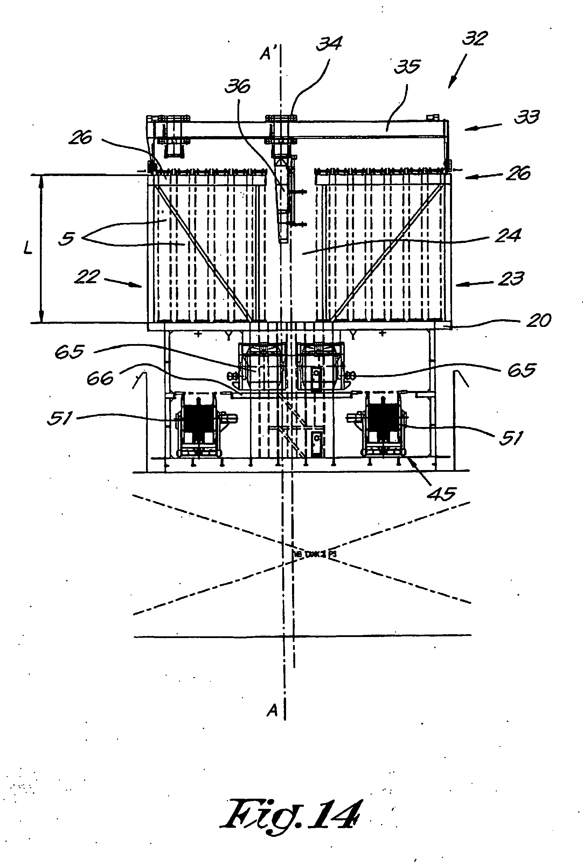

As represented in figure 14; a first part of this pipe piece handling means 32 mainly consists of an overhead travelling crane 33 with a travelling crane trolley 34.

Said overhead travelling crane 33 is movable over the width of the vessel 1 between port board and star board, while its main beam 35 is kept aligned with the vessel's length direction.

The travelling crane trolley 34 is movable backward and forward over said main beam 35 of the crane 33.

Combination of both movements allows the travelling crane trolley 34 to be placed in any position in a horizontal plane above the pipe piece stock 21 parallel to the pipe piece handling deck 20.

Under the travelling crane trolley 34 a pipe piece manipulator 36 is provided which is mainly a pipe piece gripper for gripping, rotating and lifting the pipe pieces 5 in the stock 21 into the desired position.

Hereby, the pipe piece manipulator 36 is capable of being rotated around an axis AA' perpendicular to the pipe piece handling deck 20 for directing the pipe piece manipulator 36 into the correct gripping position as well as being displaced somewhat over said axis AA_{'} perpendicular to the pipe piece handling deck 20 in order to lift a pipe piece 5 from its storage position or to put it back in said position.

This first part of the pipe piece handling means 32 is intended for transport of the pipe pieces 5 and 28-31 over the pipe piece handling deck 20 from their storage position in the pipe piece stock 21 to the moon pool 4 and vice versa.

A first aspect of the present invention is that this configuration of the pipe piece handling deck 20 as described, wherein pipe pieces 5 are stored vertically in two storage racks 22 and 23 at both sides of a central lane 24, the pipe pieces being manipulated by the overhead travelling crane 33, is very suitable for automation.

Hereby, the movements of the overhead traveling crane 33 and pipe piece manipulator 36 can be controlled through a software program on a computer, while information regarding the amount of available pipe pieces 5 and their position in the pipe piece stock 21 or in the installed fall pipe 3 can be kept up to date in a database.

The pipe piece handling means 32 on the pipe piece handling deck 20 further comprises a second part, which forms the main aspect of the present invention.

This second part of the pipe piece handling means 32 mainly consists of a pipe piece gripper 37, which is special in that it is installed on a gimbaled motion base 38 having in this case two rotational degrees of freedom, but more degrees of freedom are not excluded according to the invention.

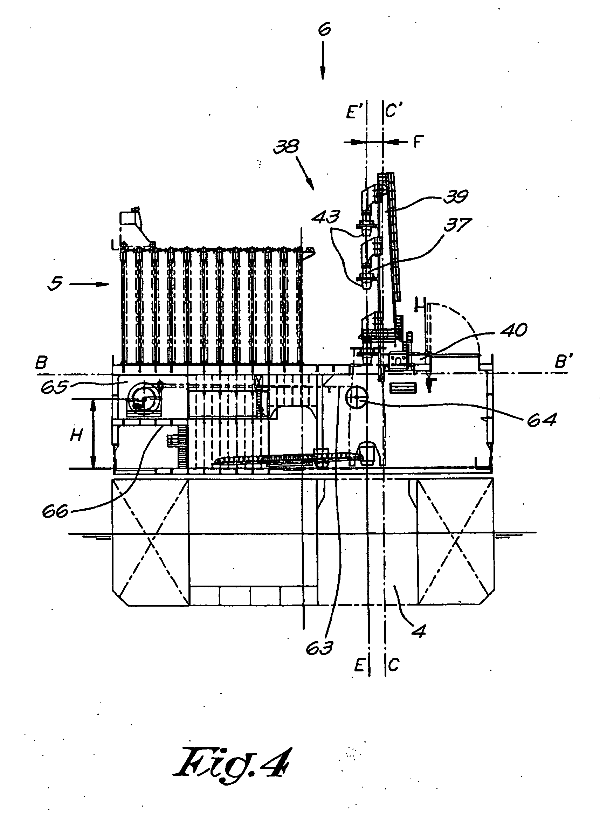

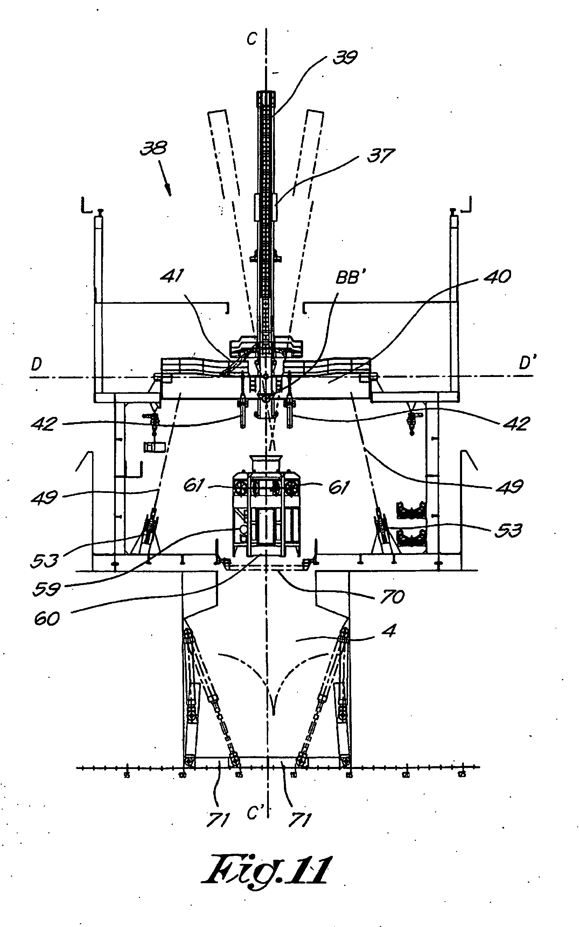

In particular in the case represented in the figures 4 and 11 for example, the pipe piece gripper 37 is mounted on a first part of the motion base 38 which consists of a guiding column 39 mounted in a rotatable manner with respect to a second part 40 of the motion base 38.

In particular, the guiding column 39 is rotatable at its foot around a first axis BB', which is perpendicular to the guiding column's longitudinal axis CC'.

The second part of the motion base consists of a motion table 40 which is rotatable around a second axis DD' with respect to the vessel 1.

The axis BB' is in this case parallel to the vessel's deck and extends over the vessel's width, whereas the axis DD' is parallel to the vessel's length direction.

So, both axes BB' and DD' are perpendicular to one another and as a consequence, the movements of the guiding column 39 and motion table 40 are easily linked to the vessel's movements, as already explained in the introduction.

The pivoting action of the guiding column 39 with respect to the motion table 40 is in this case controlled by means of one or more hydraulic cylinders 41 installed between said guiding column 39 and the motion table 40.

Also the rotation of the motion table 40 with respect to the vessel 1 is in this example controlled by hydraulic cylinders 42, which act between the motion table 40 and a part of the pipe piece handling deck 20 which is fixedly connected to the vessel 1.

It is further important to notice that the aforementioned pipe piece gripper 37 is slidably mounted along the longitudinal axis CC' of the guiding column 39.

Furthermore, the pipe piece gripper 37 has a nose 43 which is to be introduced in the open end of a pipe piece 5 in order to take a pipe piece 5 at one of its ends.

This nose 43 is rotatably mounted with respect to the rest of the pipe piece gripper 37 in such a way that a pipe piece 5 taken by the pipe piece gripper 37 can be rotated around its own longitudinal axis EE', which is located at a small offset F from the guiding column 39 axis CC'.

According to the present invention, the movement or the angle settings of the guiding column 39 and the motion table 40 of the motion base 38 set by the hydraulic cylinders 41 and 42 are controlled by a motion base control mechanism, which is an automated system not represented in the figures.

Preferably, information about the position and/or the change of position of the parts of the motion base 38 and/or of the roll and pitch movement of the vessel 1 as well as the position and/or the change of position of the installed fall pipe 3 part is supplied as an input for this motion base control mechanism.

This information can for example be provided by laser sensors which take measurements of the different parts concerned.

According to the present invention, the motion base control mechanism is first of all controlling the above said movements and or positions of the guiding column 39 and the motion table 40 in order to compensate vessel 1 movements, in particular in this case the pitch and roll movements of the vessel 1.

Hereby, these movements are compensated by the motion base control mechanism at least during a certain period of the mounting and dismounting cycle, i.e. at least during the real installation period of the cycle, wherein a pipe piece of the fall pipe is lowered to be installed or during hoisting of a pipe piece 5 of the fall pipe 3 to be removed.

Hereby, the axis EE' of the pipe piece gripper 37 on the motion base 38 is kept in alignment with respect to the upper pipe piece 5 of the fall pipe 3 already installed, regardless of the roll and pitch movement of the vessel 1.

According to another aspect of the invention, the motion base control mechanism is furthermore provided with means for coordinating a hand-over of a pipe piece 5 between the pipe piece manipulator 36 on the overhead travelling crane 33 and the pipe piece gripper 37 on the motion base 38.

The reason is of course that the pipe piece handling means 32 must be capable of transferring pipe pieces 5 between the installed fall pipe 3 and the pipe piece stock 21 on the vessel.

This means that during this transfer period of the mounting or dismounting cycle of pipe pieces 5 of the fall pipe 3 the motion base 38 is kept in such a position that the axis EE' of the pipe piece gripper 37 is parallel to the axis AA' of the pipe piece manipulator 36.

This implies that the motion table 40 is kept in a parallel position with respect to the pipe piece handling deck 20 and that the guiding column 39 is kept perpendicularly with respect to the motion table 40 during this transfer period.

Another aspect of the invention is that the fall pipe assembly and operation systemfall pipe assembly and operation system6 comprises fall pipe hoisting equipment for lifting the remaining fall pipe part 3, for example during dismounting in order to pick off another pipe piece 5, or for lowering the already installed fall pipe part 3, for example during mounting in order to add an additional pipe piece 5.

Said fall pipe hoisting equipment 44 is provided on the so-called winch deck 45 which is in this case another ±11 m below the pipe piece handling deck 20, just above the vessel's main deck.

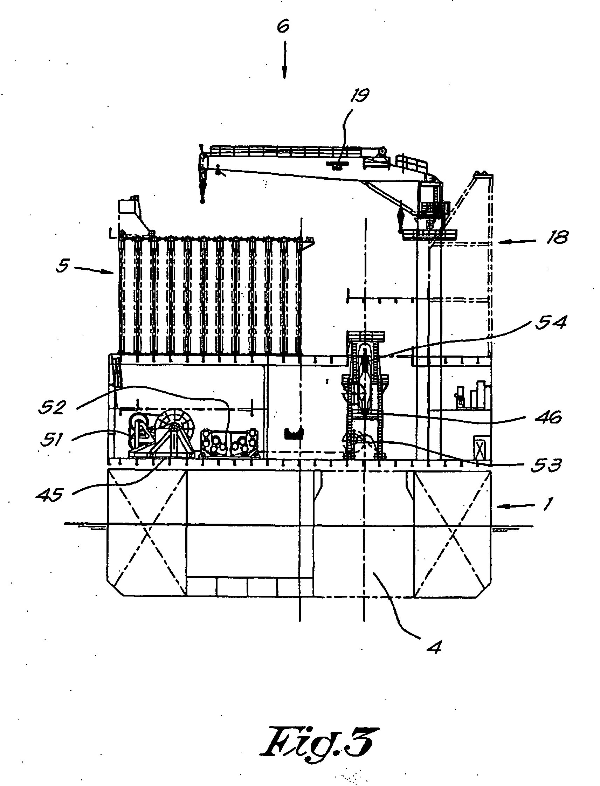

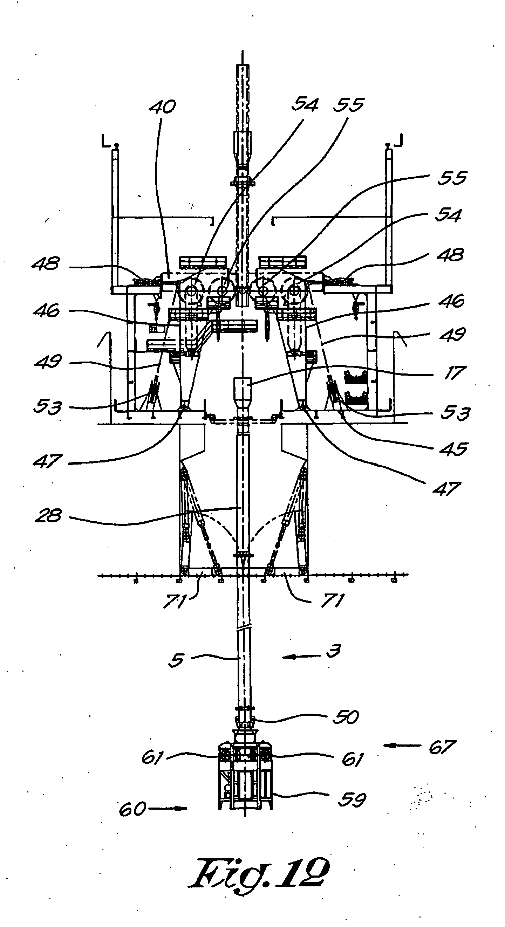

A top view of this winch deck 45 and the fall pipe hoisting equipment 44 is represented in figure 10, while some other details of the fall pipe hoisting equipment 44 are more visible from figures 3 and 12.

In particular, the fall pipe hoisting equipment 44 comprises two gallows 46 installed at opposite sides around the moon pool 4 in the vessel 1.

Said gallows are mounted in a rotatable manner on the winch deck 45 by means of hinges 47 provided in the feet of the gallows 46.

The tilting of the gallows 46 around said hinges 47 is controlled by hydraulic gallow tilting cylinders 48 which are mounted between the tops of the gallows 46 and the vessel's supporting structure.

The gallows 46 are each intended for holding a fall pipe wire 49 in order to hoist or to lower an installed fall pipe part 3.

To that aim, one end of each fall pipe wire 49 is connected to a fall pipe end piece 50, for example by means of a hook provided at one end of each fall pipe wire 49, which hooks are clicked into eyes provided at opposite sides on the fall pipe end piece 50.

The fall pipe end piece 50 is intended for bearing the entire remaining fall pipe 3 column.

The other ends of the fall pipe wires 49 are each wound on a storage winch 51, each provided with its own spooling device and compensator on the winch deck 45.

The pulling force needed for hoisting the fall pipe 3 is provided by additional traction winches 52 installed on the winch deck 45 in front of the storage winches 51.

In order to guide the fall pipe wires 49 from their traction winch 52 to the top of their corresponding gallow 46, the fall pipe wires 49 are each passed over a separate fall pipe wire deck sheave 53 installed near the gallows 46 on the winch deck 45.

At the top of the gallows 46 said fall pipe wires 49 further pass over a fall pipe wire compensation sheave 54 and a fall pipe wire hoist sheave 55 over which the corresponding fall pipe wire 49 is guided to the fall pipe end piece 50 for bearing the entire installed fall pipe 3 part, which rests on top of said fall pipe end piece 50.

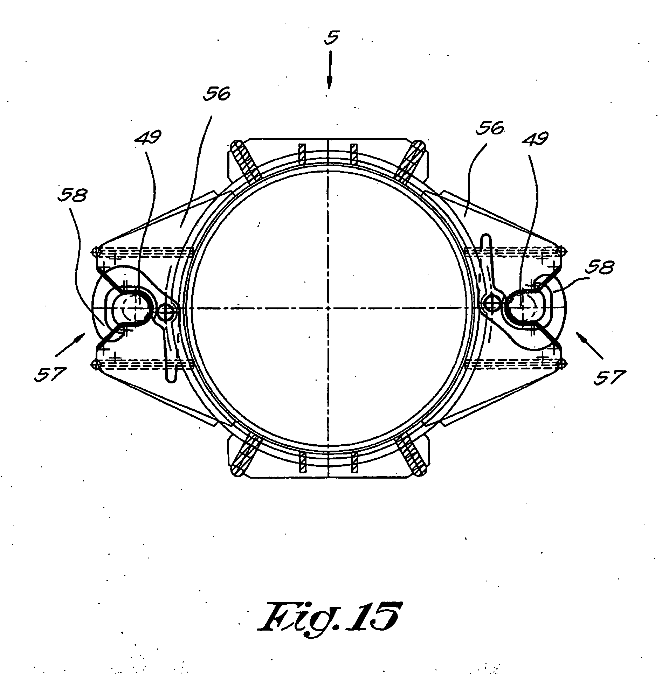

As is clearly represented in figure 15, each pipe piece 5 is provided with a wire guide 56 at its top end, as well as at its bottom end.

In these wire guides 56 two notches 57 are provided opposite to one another, which notches 57 are each intended for receiving a fall pipe wire cable 49.

In order to keep said fall pipe wires 49 in the notches 57 the top wire guides 56 are additionally provided with retaining hooks 58, which are preferably spring engaged.

During installation of a pipe piece 5 on the fall pipe 3, these notches 57 in the pipe piece wire guides 56 are aligned with the fall pipe wires 49 by the pipe piece gripper 37 on the guiding column 39, the nose 39 of this pipe piece gripper 37 being rotated around its axis EE' until the pipe piece 5 is in the correct position.

The hooks 58 are preferably also operated by the pipe piece gripper 37, on the one hand, for securing a pipe piece 5 to the fall pipe wires 49, and, on the other hand, for releasing the hooks 58 when a pipe piece 5 is removed from the fall pipe 3.

This way of holding together and aligning the pipe pieces 5 is very practical since no complicated connection means are needed, the pipe pieces 5 are being easily installed and removed without difficult manipulations.

Such way of connecting is also very suitable for an automated fall pipe assembly and operation system 6, as in the present invention.

However, other ways of mounting and dismounting the pipe pieces 5 of the fall pipe 3 are not excluded from the invention.

The gallows 46 of the fall pipe hoisting equipment are hinge mounted for a pivoting action since in that way the distance G between the fall pipe wire hoisting sheaves 55 on each gallow 46 is adaptable, and as a consequence also of the distance G between the fall pipe wires 49 at the top of the gallows 46.

By adapting said distance G the opening between the gallows 46 can be made broader for passing larger parts (for example the wire guides 56 of a pipe piece 5) or made smaller for passing smaller parts.

Another aspect of a a fall pipe assembly and operation system 6 according to the present invention, is that it comprises driving means 59 connectable to the fall pipe 3, by which the fall pipe dumping end 60 is positioned with respect to the vessel 1 or to the underwater soil or bedrock.

A cross-sectional view of the driving means 59 is represented in figures 11 and 12.

Preferably the aforementioned driving means 59 are executed as a remotely operated vehicle (ROV), which can be operated by a person for example from a control cabin on the vessel 1.

Hereby, propulsion means 61 are installed on the ROV 59 along different steering directions, so that the fall pipe 3 dumping end 60 can be driven to the correct position in the water.

According to the present invention the driving means 59 are preferably provided around the fall pipe 3, or, in other words, the fall pipe 3 is installed through the center of the driving means 59, in such a way that the driving means 59 can travel up and down over the fall pipe 3 length.

In order to hoist or to lower the driving means 59 with respect to the fall pipe 3, the fall pipe assembly and operation system 6 is provided with a driving means hoisting device 62.

For details of said driving means hoisting device 62 reference is made to figures 4, 8 and 14.

Hereby in the presently discussed embodiment, the driving means hoisting device 62 comprises two driving means wires 63, each wire 63 connected with one of its ends to a connecting eye on the driving means 59, these eyes being positioned opposite to one another.

The driving means wires 63 are each suspending from their corresponding gallow 46, each driving means wire 46 being guided over a driving means hoist sheave 64 mounted on said gallow 46.

The other end of the driving means wires 63 is wound on a corresponding driving means winch 65, which winch 65 supplies the power for lifting the driving means 59.

In the case represented for example in figures 4 and 14, the axes of the driving means hoist sheave 64 and the driving means winch 65 are lying in more or less the same plane parallel to the winch deck 45 at a certain height H above said winch deck 45, the driving means winch 45 being supported on an intermediate stringer deck 66.

At the fall pipe bottom dumping end 60 the driving means 59 can slide over a special pipe piece 67 which is mounted under the fall pipe end piece 50.

To that aim, said special pipe piece 67 is provided with sliding strips.

Furthermore, the fall pipe assembly and operation system 6 is provided with some centralizing equipment for keeping the fall pipe 3 upper piece in a central position with respect to the moon pool 4.

In this embodiment, represented for example in figure 10, the centralizing equipment consists of four fall pipe centralizing cylinders 68 positioned more or less according to the diagonals of the moon pool 4.

Hereby, the movable ends of said fall pipe centralizing cylinders 67 are connected to the fall pipe 3 by means of fiber ropes 69.

The moon pool 4 itself can be opened and closed by means of hatches, respectively sliding top hatches 70 and pivoting bottom hatches 71, said hatches 70 and 71 being operated by means of hydraulic cylinders.

According to the most preferred embodiment of a fall pipe assembly and operation system 6 in accordance with the present invention fully automated control means are provided for controlling the complete mounting and/or dismounting sequence of pipe pieces 5 of the fall pipe 3, with exception of the special pipe pieces which are installed at the top end or the dumping end 60 of the fall pipe 3, i.e. the telescopic pipe piece 29, the fall pipe chute 17, the fall pipe end piece 50 and/or the special fall pipe piece 67 for the ROV 59.

In particular, said fully automated control means are preferably capable of controlling the transport of pipe pieces 5 from the moon pool 4 to the stock 21 and vice versa, hereby coordinating the hand-over between the pipe piece manipulator 36 on the overhead travelling crane 33 and the pipe piece gripper 37 on the motion base 38.

Also, alignment of the pipe piece gripper 37 on the motion base 38 with the fall pipe 3 upper piece direction is preferably controlled by said fully automated control means.

According to the present invention, other actions that are preferably controlled in an automatic way, are:
- the tilting motion of the gallows 46;
- the hoisting and the lowering of a fall pipe piece 3 by means of the fall pipe piece handling means 32;
- the hoisting and/or lowering of the installed fall pipe 3 by means of the fall pipe hoisting equipment 44; and/or,
- the centralization of the fall pipe 3 in the moon pool 4 by means of the fall pipe centralizing cylinders 68.

The functioning and the use of a fall pipe assembly and operation system 6 in accordance with the present invention will hereafter be described, for the case wherein a fall pipe is deployed.

The dismounting of an installed fall pipe 3 is completely similar by reversing the installation sequence and will not be described.

The installation sequence of a pipe can be divided into four main subtasks, i.e.:
- a preparatory phase;
- the transport of pipe pieces 5 from the stock 21 to the moon pool 4 and to the pipe piece gripper 37 on the motion base 38;
- the addition of a pipe pieces 5 to the fall pipe 3 by means of the pipe piece gripper 37 on the motion base 38; and,
- the finishing phase.

It is clear that said second and third subtasks are repeated until sufficient pipe pieces 5 are added to the fall pipe 3.

Typically, according to the present invention, said second and third subtasks are fully automated, whereas during the preparatory phase and the finishing phase some manual intervention might be needed, but if possible during said preparatory phase and finishing phase some steps are preferably also automated.

During the preparatory phase, first of all, the fall pipe wires 49 must be fully reeved over their sheaves 53, 54 and 55 and must be terminated to the fall pipe end piece 50.

xFurthermore, the driving means 59 must be installed on top of the sliding moon pool top hatches 70 directly under the gallows 46, which top hatches 70 are still closed for that purpose.

In order to install the special pipe piece 67 in the centre of the driving means 59, the special pipe piece 67 is to be bolted to the fall pipe end piece 50, after which it is lowered into place in the driving means 59.

The preparatory phase is closed off by attaching the driving means 59 to its driving means wires 63, after which the driving means 59 is clamped to the special pipe piece 67 by means of its own hydraulic system.

Transport of a pipe piece 5 from its stock position to the moon pool 4 is performed by the pipe piece handling means 32, more in particular by the pipe piece manipulator 36 on the overhead travelling crane trolley 34 of the overhead travelling crane 33.

As explained, the handling sequence during this transport phase is preferably fully automated.

The sequence during said phase is preferably more or less as follows:
1. The pipe piece manipulator 36 is positioned in its starting position. Hereby, the main beam 35 of the overhead travelling crane 33 is parked approximately at the vessel's centre line, the travelling crane trolley 34 being at the center of said main beam 35 above the central lane 24. The pipe piece manipulator 36 is preferebaly placed in its lowest position over the axis AA' and turned to the side wall 25 of the vessel 1, its clamps being in the opened position;
2. The main beam 35 of the overhead travelling crane 33 is moved in athwart vessel's direction to the desired pipe piece bay of the storage racks 22 and 23;
3. The pipe piece manipulator 36 is turned 90 degrees around the AA' axis until it is oriented with is open clamps to the desired storage rack 22 or 23;
4. The travelling crane trolley 34 travels over the main beam 35 to the position of the first pipe piece 5 in the corresponding bay of the storage rack 22 or 23. Preferably pipe piece 5 positions in the storage racks 22 and 23 and pipe piece 5 types are administered by a computer program;
5. The clamps of the pipe piece manipulator 36 are closed around the concerned pipe piece 5;
6. The pipe piece manipulator 36 lifts the concerned pipe piece 5 over the axis AA', preferably about 1,30 m;
7. The travelling crane trolley 34 travels back over the main beam 35 to the center of the central lane 24;
8. The pipe piece manipulator is turned over 90° around the axis AA' to face the moon pool 4;
9. The main beam 35 of the overhead travelling crane 33 is parked again in its starting position and a signal is awaited that the pipe piece gripper 37 on the motion base 38 is ready for receiving the pipe piece 5;
10. When said signal is received, the overhead travelling crane 33 is slowly moved towards the motion base 38 and positions the pipe piece 5 in a so-called firing line position for initiating a hand-over with the pipe piece gripper 37 on the motion base 38;
11. The pipe piece gripper 37 on the motion base 38 grips the concerned pipe piece 5 at the top wire guide 56 and takes over the load by slightly lifting the pipe piece 5, for example over approximately 10 cm;
12. When the pipe piece 5 is actually carried by the pipe piece gripper 37 on the motion base 38, which situation is confirmed by some sensors, the pipe piece manipulator 36 releases the pipe piece 5 by opening its clamps. The hand-over of a pipe piece 5 between the pipe piece manipulator 36 and the pipe piece gripper 37 is preferably also controlled by the motion base control mechanism or a larger automated system in which the motion base control mechanism is integrated.
13. The overhead travelling crane 33 is positioned again in a position corresponding to step 2 if additional pipe pieces 5 are still to be added to the fall pipe 3 or to its initial starting position corresponding to step 1. The pipe piece manipulator 36 is lowered again to its lowest position over the axis AA', for example by lowering it again some 1,30 m.
14. Another pipe piece 5 is taken and the sequence is repeated or the overhead travelling crane 33 is staying in its starting position.

When retrieving the fall pipe 3, the sequence works in exact the reverse order.

The next main subtask is to transport the pipe piece 5 vertically to the fall pipe 3 and to mount it in the part of the fall pipe 3 which is already installed.

This main subtask is executed by the pipe piece gripper 37 in combination with the motion base 38 controlled by the motion base control mechanism.

Hereby, the pipe piece 5 received from the pipe piece manipulator 36 is to be lowered into the fall pipe 3.

Since the notches 57 in the pipe piece wire guides 56 have to be aligned with the fall pipe wires 49, the pipe piece 5 must also be rotated along its vertical axis EE' to put it in the correct orientation.

For reasons mentioned before related to the mounting of the pipe piece 5, in the same sequence the pipe piece 5 has to be aligned with the fall pipe 3 (which is free to swing dynamically to any angle with the vessel 1 with a maximum of 9,5° in any direction).

This is actually the main task of the motion base control mechanism.

In the sequence for executing this third main subtask, the motion base 38 interacts with the overhead travelling crane 33(for pipe piece 5 transfer), with the gallows 46 (which are pivoted around their hinges 47 between an open and closed position) and with the fall pipe hoisting wire winches 51 and 52, as well as with the driving means winches 65.

In principle said sequence is according to the invention fully automated.

Hereby, the fall pipe assembly and operation system system6 is preferably provided with fully automated control means for that aim.

The sequence for adding a pipe piece 5 to the fall pipe 3 could for example be as follows:
1. In the start position the guiding column 39 of the motion base 38 is in upright position, which position is confirmed by sensors. The pipe piece gripper 37 is in the upper most position on the guiding column 39 and the pipe piece gripper nose 43 is rotated in the correct position to receive a pipe piece 5. The previously installed pipe piece 5 is standing on the fall pipe 3 with its upper wire guide 56 approximately 8 m below the centre line of the fall pipe wire hoist sheave 55;
2. When the motion base control mechanism gets a signal that the pipe piece 5 is positioned in the so-called firing line position by the overhead travelling crane 33 and is ready for transfer, the pipe piece gripper 37 is lowered over the guiding column 39 until the pipe piece gripper nose 43 rests on the upper pipe piece wire guide 56 or is introduced in the pipe piece 5;
3. The pipe piece gripper 37 clamps the pipe piece 5 after which it lifts the pipe piece 5 slightly (over approximately 10 cm) in order to take lover the weight;
4. The lower pipe piece end is kept in a desired fixed position for alignment with the fall pipe wires 49, for example by means of adjustable guiding rollers on the guiding column 39 on the motion base 38. At the same time, the pipe piece manipulator 36 on the overhead travelling crane 33 releases the pipe piece 5 and the overhead travelling crane 33 moves away from the moon pool 4. A signal is given when the overhead travelling crane 33 is out of the motion envelope of the motion base 38;
5. The pipe piece 5 is rotated approximately 45° around it's axis EE' by the pipe piece gripper nose 43 in order to align the pipe piece notches 57 in the wire guides 56 with the fall pipe wires 49;
6. From this moment onwards, the guiding column 39 is kept actively aligned by the motion base control mechanism with the fall pipe 3 below, hereby using the hydraulic cylinders 41 and 42 for manipulating the position of the motion table 40 and the guiding column 39 itself;
7. The gallows 46 are then opened to allow the lower pipe piece wire guide 56 to pass;
8. The pipe piece gripper 37 is lowered until the pipe piece lower wire guide 56 is approximately 1000 mm below the centreline of the fall pipe wire hoist sheave 55;
9. The gallows 46 are closed again and the fall pipe wires 49 are moved into the notches 57 in the fall pipe lower wire guide 56;
10. The lower pipe piece end is again released by adjusting the guiding rollers on the guiding column 39;
11. The pipe piece gripper 37 is lowered with approximately 7,0 m over the guiding column 39 until the pipe piece 5 rests on the upper wire guide 56 of the previously installed pipe piece of the fall pipe 3. During this motion the lower pipe wire guide 56 is held between and guided by the fall pipe wires 49. When the pipe piece 5 touches the fall pipe 3, the pipe piece gripper driving winch is set to CT mode (low load);
12. The gallows 46 are opened again to allow the upper pipe piece wire guide 56 to pass. At the same time, the pipe piece gripper nose 43 is used to open the fall pipe wire retaining hooks 58;
13. The traction winches 52 now lower the complete fall pipe 3 over approximately 6,0 m. In this position the upper wire guide 56 of the fall pipe 3 is approximately 2,0 m below the centreline of the fall pipe wire hoist sheaves 55. The pipe piece gripper 37 automatically follows said movement while its winch is still in CT mode. Also the driving means winches 65 follow in slave control to the traction winches 52;
14. The gallows 46 are now closed again to position the fall pipe wires 49 in the notches 57 in the upper fall pipe flange 3. After this, the pipe piece gripper nose 43 releases the fall pipe wire retaining hooks 58 and so the pipe piece 5 is locked to the fall pipe wires 49;
15. The pipe piece gripper 37 then releases the pipe piece 5 and is pulled up all the way to its upper position on the guiding column 39;
16. The pipe piece gripper nose is rotated 45° to receive the next pipe piece 5;
17. The guiding column 39 on the motion base 38 is put again in the upright position, ready to receive the next pipe piece 5;
18. The traction winches 52 then lower the complete fall pipe 3 with another 6,0 m in which position the upper wire guide 56 of the fall pipe 3 is approximately 8,0 m below the centreline of the fall pipe wire hoist sheave 55. The driving means winches 65 follow in slave control the traction winches 52.

Step 18 can be executed simultaneously with steps 2 to 6 of the next pipe piece installation sequence as long as step 18 is completely finished before step 7 is started.

It is clear that with such an automated system a fall pipe 3 can be installed in a very efficient way, requiring a very much reduced installation time.

The sequences here described are nevertheless just examples and it is of course possible according to the present invention to add or cancel steps in the sequences or to modify the sequence system completely if this would be considered to be useful in certain applications.

According to the invention the above described sequences are fully automated.

However, for the first pipe piece 5 of the fall pipe 3 the sequence must be slightly different.

When the first pipe piece 5 is lowered, the driving means 59 are still standing on the moon pool top hatches 70.

The sequence for the first pipe piece 5 of the fall pipe 3 could therefore be as follows:
1. The driving means 59 is clamped to the special pipe piece 67;
2. The driving means 59 is lifted over approximately 0,5 m using the fall pipe wires 49;
3. The moon pool top hatches 70 are opened;
4. The driving means 59 is lowered by veering the fall pipe wire winches 51 and 52 and the driving means winches 65 until the driving means 59 is hanging in the moon pool 4. Hereby, the wire guide 56 of the fall pipe end piece 50 which is mounted on top of the driving means 59 is preferably positioned at approximately 7 m below the centreline of the fall pipe wire hoist sheave 55.
5. Then steps 1 to 18 of the precedingly described sequence for the installation of the other pipe pieces 5 can be performed in the same way for the first pipe piece 5. Nevertheless, the alignment of the motion base guiding column 39 can not be realized automatically as there is not yet a fall pipe part 3 which can be detected by the measuring sensors of the motion base control mechanism. If however the driving means 59 is provided with a system for keeping it centralized in the moon pool 4, the first pipe piece 5 can be lowered with the motion base guiding column 39 in its upright position.

Nevertheless, most probably the first pipe piece 5 can not be lowered using the automated sequences.

The last pipe piece or pieces 5 to be installed on the fall pipe 3 have flow holes and special attention is also required for these pipe pieces 5.

The installation of a 6 m pipe piece 31 or a 9 m pipe piece 30 can be performed using the same sequences as described above.

However, the lowering distances as indicated in the above sequences must be different.

The installation of these pipe pieces 30 and 31 might therefore need some manual control or can be for example performed semi-automatically.

These special pipe pieces 30 and 31 are stored differently in the special additional storage room 27 of the storage rack 22.

These pipe pieces 30 and 31 can only be reached when the overhead travelling crane 33 enters the motion envelope of the motion base 38.

For safety reasons, the motion base guiding column 39 must therefore be locked in its upright position when said special pipe pieces 30 and 31 are fetched.

To pick-up the special pipe pieces 30 and 31, the pipe piece manipulator 36 must also be turned 180° instead of 90° as in the preceding cases.

When said special pipe pieces 30 and 31 are installed, finally the telescope pipe piece 28 needs to be mounted.

The installation of said telescopic pipe piece 28 is somewhat special and will require manual intervention.

The present invention is in no way limited to the embodiments described above and represented in the drawings, but such a fall pipe assembly and operation system 6 can be realised in different shapes and dimensions which are different from the above-described, without departure from the scope of the invention.

## Claims

1. Fall pipe assembly and operation system (6) for assembling and/or disassembling a fall pipe (3) which consists of rigid pipe pieces (5) aligned with one another and through which rock, stone or any other material (2) can be dumped from a vessel (1) into deepwater, and/or for use during the dumping operation, the fall pipe assembly and operation system (6) comprising a pipe piece handling means (32) for installing or removing pipe pieces (5) of the fall pipe (3), **characterized in that** the pipe piece handling means (32) is at least partly installed on a motion base (38), which motion base (38) is mounted movably with respect to the vessel (1), the movement of the motion base (38) being controlled by a motion base control mechanism for compensating vessel (1) movements in such a manner that during lowering of a pipe piece (5) of the fall pipe (3) to be installed or during hoisting of a pipe piece (5) to be removed the pipe piece handling means (32) on the motion base (38) is kept by the motion base control mechanism in alignment with respect to the upper pipe piece (5) of the fall pipe (3) already installed regardless of at least the pitch and roll movements of the vessel (1).

2. Fall pipe assembly and operation system (6) according to claim 1, **characterized in that** the pipe piece handling means (32) comprise a pipe piece gripper (37) which is mounted on a first part (39) of the motion base (38), which first part (30) is rotatable around a first axis (BB') with respect to a second part (40) of the motion base (38), this second part (40) of the motion base (38) being rotatable around a second axis (DD') with respect to the vessel (1).

3. Fall pipe assembly and operation system (6) according to claim 2, **characterized in that** said first axis (BB') and second axis (DD') are perpendicular to one another.

4. Fall pipe assembly and operation system (6) according to claim 2 or 3, **characterized in that** said second axis (DD') is parallel to the longitudinal axis of the vessel (1) and that the rotation of the second part (40) of the motion base (38) around said second axis (DD') is controlled in such a way by the motion base control mechanism that the roll movement of the vessel (1) is compensated during the aforementioned alignment of the pipe piece gripper (37) and the upper pipe piece (5) of the fall pipe (3).

5. Fall pipe assembly and operation system (6) according to claims 3 and 4, **characterized in that** the rotation of the first part (39) of the motion base (38) around said first axis (BB') is controlled in such a way by the motion base control mechanism that the pitch movement of the vessel (1) is compensated during the aforementioned alignment of the pipe piece gripper (37) and the upper pipe piece (5) of the fall pipe (3).

6. Fall pipe assembly and operation system (6) according to any of claims 2 to 5, **characterized in that** the first part of the motion base (38) is a guiding column (39) on which the aforementioned pipe piece gripper (37) is mounted slidably with respect to the longitudinal axis (CC') of said guiding column (39).

7. Fall pipe assembly and operation system (6) according to any of claims 2 to 6, **characterized in that** the first part of the motion base is a guiding column (39) on which the aforementioned pipe piece gripper (37) is mounted, the pipe piece gripper (37) having a nose (43) for gripping a pipe piece (5) in order to take the pipe piece (5) at one of its ends, this nose being rotatable with respect to the rest of the pipe piece gripper (37) in such a way that a pipe piece (5) taken by the pipe piece gripper (37) can be rotated around its own longitudinal axis (EE'), which is located at a relative small offset (F) from the guiding column (39).

8. Fall pipe assembly and operation system (6) according to any of claims 2 to 6, **characterized in that** the second part of the motion base (38) is a motion table (40).

9. Fall pipe assembly and operation system (6) according to any of the preceding claims, **characterized in that** it comprises fall pipe hoisting equipment (44) for lifting or lowering the installed fall pipe part (3).

10. Fall pipe assembly and operation system (3) according to claim 9, **characterized in that** the aforementioned fall pipe hoisting equipment (44) comprises two gallows (46) installed at opposite sides around a moon pool (4) in the vessel (1) through which the fall pipe (3) is installed, said gallows (46) holding each a fall pipe wire (49), which wires (49) are wound with their one end on their storage winch (51) and are guided over a fall pipe wire hoisting sheave (55) on the corresponding gallow (46), the other ends of the fall pipe wires (49) being connected to a fall pipe end piece (50).

11. Fall pipe assembly and operation system (6) according to claims 7 and 10, **characterized in that** the pipe pieces (5) have wire guides (56) in which notches (57) are provided for receiving the fall pipe wires (49), the pipe piece gripper (37) on the motion base (38) aligning said notches (57) with the fall pipe wires (49) by rotating its nose (43) around its axis (EE').

12. Fall pipe assembly and operation system (6) according to claim 11, **characterized in that** said notches (57) are additionally provided with hooks (58) for securing the fall pipe wires (49) in the notches (57), the hooks (58) being operated by the pipe piece gripper (37).

13. Fall pipe assembly and operation system (6) according to any of claims 10 to 12, **characterized in that** the aforementioned gallows (46) are rotatably mounted with respect to the vessel (1) in such a way that the distance (G) between the fall pipe wire hoisting sheaves (55) on each gallow (46) is adaptable.

14. Fall pipe assembly and operation system (6) according to any of the preceding claims, **characterized in that** it comprises driving means (59)) connectable to the fall pipe (3), by which the fall pipe dumping end (60) is positioned with respect to the vessel (1).

15. Fall pipe assembly and operation system (6) according to claim 14, **characterized in that** the aforementioned driving means (59) are executed as a remotely operated vehicle.

16. Fall pipe assembly and operation system (6) according to claims 14 or 15, **characterized in that** it is provided with a driving means hoisting device (62) for lifting or lowering the aforementioned driving means (59) with respect to the fall pipe (3).

17. Fall pipe assembly and operation system (6) according to claim 16, **characterized in that** the driving means (59) are provided around the fall pipe (3) and can travel up and down over the fall pipe (3) length, the driving means hoisting device (62) comprising two driving means wires (63) each held by a corresponding gallow (46), each wire (63) being wound with its one end on its driving means winch (65) and being guided over a driving means sheave (64) on its corresponding gallow (46), the other end of the driving means wire (63) being connected to the driving means (59).

18. Fall pipe assembly and operation system (6) according to any of the preceding claims, **characterized in that** it comprises a pipe piece stock (21) provided on a pipe piece handling deck (20) on the vessel (1), the pipe piece handling means (32) comprising an overhead travelling crane (33) with a travelling crane trolley (34), a pipe piece manipulator (36) being mounted under the travelling crane trolley (34).

19. Fall pipe assembly and operation system (6) according to claim 18, **characterized in that** the motion base control mechanism is provided with means for coordinating a hand-over of a pipe piece (5) between the pipe piece manipulator (36) on the overhead travelling crane (33) and the pipe piece gripper (37) on the motion base (38).

20. Fall pipe assembly and operation system (6) according to claim 18 or 19, **characterized in that** the pipe pieces (5) are stored mainly with their length (L) extending in a direction (AA') perpendicularly to the pipe piece handling deck (20), the travelling crane trolley (34) being movable in a plane parallel to the pipe piece handling deck (20) for transport of pipe pieces (5) over the pipe piece handling deck (20) from their storage position (21) to a moon pool (4) in the vessel (1) and vice versa.

21. Fall pipe assembly and operation system (6) according to any of the preceding claims, **characterized in that** it is provided with centralizing equipment for keeping the fall pipe upper piece (5) centered in a moon pool (4) in the vessel (1).

22. Fall pipe assembly and operation system (6) according to claim 21, **characterized in that** said centering means mainly consist of four fall pipe centralizing cylinders (68) arranged according to four corners of a square around the moon pool (4) and directed to the center of the moon pool (4), each cylinder (68) connecting the fall pipe (3) to the vessel (1) in a movable manner by means of a rope (69).

23. Fall pipe assembly and operation system (6) according to any of claims 18 to 22, **characterized in that** it is provided with fully automated control means for controlling the transport of pipe pieces (5) from a moon pool (4) to the stock (21) and vice versa, for coordinating the hand-over between the pipe piece manipulator (36) on the overhead travelling crane (33) and the pipe piece gripper (37) on the motion base (38), and/or for aligning the pipe piece gripper (37) on the motion base (38) with the fall pipe upper piece (5) direction.

## Patentansprüche

1. Fallrohr-Montage- und Betriebssystem (6) zur Montage und Demontage eines Fallrohrs (3), das aus starren Rohrstücken (5) besteht, die zueinander gefluchtet sind, und durch das Felsbrocken, Steine oder jedes andere Material (2) von einem Schiff (1) in Tiefwasser versenkt werden können, und/oder zur Verwendung während des Versenkvorgangs, wobei das Fallrohr-Montage- und Betriebssystem (6) ein Rohrstückhandhabungsmittel (32) zum Installieren oder Entfernen von Rohrstücken (5) des Fallrohrs (3) umfasst, **dadurch gekennzeichnet, dass** das Rohrstückhandhabungsmittel (32) mindestens teilweise auf einer Bewegungsplatfform (38) installiert ist, welche Bewegungsplattform (38) in Bezug auf das Schiff (1) bewegbar montiert ist, wobei die Bewegung der Bewegungsplattform (38) durch einen Bewegungsplattform-Steuermechanismus zum Kompensieren von Bewegungen des Schiffs (1) so gesteuert wird, dass während des Absenkens eines zu installierenden Rohrstücks (5) des Fallrohrs (3) oder während des Anhebens eines zu entfernenden Rohrstücks (5) das Rohrstückhandhabungsmittel (32) auf der Bewegungsplattform (38) durch den Steuermechanismus für die Bewegungsplattform in Bezug auf das bereits installierte obere Rohrstück (5) des Fallrohrs (3) in Fluchtung gehalten wird, ungeachtet mindestens der Stampf- und Rollbewegungen des Schiffs (1).

2. Fallrohr-Montage- und Betriebssystem (6) nach Anspruch 1, **dadurch gekennzeichnet, dass** die Rohrstückhandhabungsmittel (32) einen Rohrstückgreifer (37) umfassen, der an einem ersten Teil (39) der Bewegungsplatfform (38) montiert ist, welcher erste Teil (30) in Bezug auf einen zweiten Teil (40) der Bewegungsplattform (38) um eine erste Achse (BB') rotierbar ist, wobei dieser zweite Teil (40) der Bewegungsplattform (38) in Bezug auf das Schiff (1) um eine zweite Achse (DD') rotierbar ist.

3. Fallrohr-Montage- und Betriebssystem (6) nach Anspruch 2, **dadurch gekennzeichnet, dass** besagte erste Achse (BB') und zweite Achse (DD') senkrecht zueinander sind.

4. Fallrohr-Montage- und Betriebssystem (6) nach Anspruch 2 oder 3, **dadurch gekennzeichnet, dass** besagte zweite Achse (DD') parallel zur Längsachse des Schiffs (1) verläuft und dass die Rotation des zweiten Teils (40) der Bewegungsplattform (38) um besagte zweite Achse (DD') durch den Bewegungsplattform-Steuermechanismus so gesteuert wird, dass die Rollbewegung des Schiffs (1) während des vorgenannten Fluchtens des Rohrstückgreifers (37) und des oberen Rohrstücks (5) des Fallrohrs (3) kompensiert wird.

5. Fallrohr-Montage- und Betriebssystem (6) nach Ansprüchen 3 und 4, **dadurch gekennzeichnet, dass** die Rotation des ersten Teils (39) der Bewegungsplattform (38) um besagte erste Achse (BB') durch den Bewegungsplattform-Steuermechanismus so gesteuert wird, dass die Stampfbewegung des Schiffs (1) während des vorgenannten Fluchtens des Rohrstückgreifers (37) und des oberen Rohrstücks (5) des Fallrohrs (3) kompensiert wird.

6. Fallrohr-Montage- und Betriebssystem (6) nach einem der Ansprüche 2 bis 5, **dadurch gekennzeichnet, dass** der erste Teil der Bewegungsplattform (38) eine Führungssäule (39) ist, woran der vorgenannte Rohrstückgreifer (37) verschiebbar in Bezug auf die Längsachse (CC') besagter Führungssäule (39) montiert ist.

7. Fallrohr-Montage- und Betriebssystem (6) nach einem der Ansprüche 2 bis 6, **dadurch gekennzeichnet, dass** der erste Teil der Bewegungsplattform eine Führungssäule (39) ist, woran der vorgenannte Rohrstückgreifer (37) montiert ist, wobei der Rohrstückgreifer (37) eine Nase (43) zum Greifen eines Rohrstücks (5) aufweist, um das Rohrstück (5) an einem seiner Enden zu nehmen, wobei diese Nase in Bezug auf den Rest des Rohrstückgreifers (37) so rotierbar ist, dass ein von dem Rohrstückgreifer (37) genommenes Rohrstück (5) um seine eigene Längsachse (EE') rotiert werden kann, die sich unter einem relativ kleinen Achsversatz (F) von der Führungssäule (39) befindet.

8. Fallrohr-Montage- und Betriebssystem (6) nach einem der Ansprüche 2 bis 6, **dadurch gekennzeichnet, dass** der zweite Teil der Bewegungsplattform (38) eine Bewegungstafel (40) ist.

9. Fallrohr-Montage- und Betriebssystem (6) nach einem der vorgenannten Ansprüche, **dadurch gekennzeichnet, dass** es Fallrohrhebeausrüstung (44) zum Anheben oder Absenken des installierten Fallrohrteils (3) umfasst.

10. Fallrohr-Montage- und Betriebssystem (3) nach Anspruch 9, **dadurch gekennzeichnet, dass** die vorgenannte Fallrohrhebeausrüstung (44) zwei Galgen (46) umfasst, die an entgegengesetzten Seiten um einen Moonpool (4) in dem Schiff (1) installiert sind, durch den das Fallrohr (3) installiert ist, wobei besagte Galgen (46) jeder ein Fallrohrkabel (49) halten, welche Kabel (49) mit ihrem einen Ende auf ihre Speicherwinde (51) aufgewickelt sind und über eine Fallrohr-Hebeseilscheibe (55) an dem entsprechenden Galgen (46) geführt sind, wobei die anderen Enden der Fallrohrkabel (49) mit einem Fallrohrendstück (50) verbunden sind.

11. Fallrohr-Montage- und Betriebssystem (6) nach Ansprüchen 7 und 10, **dadurch gekennzeichnet, dass** die Rohrstücke (5) Kabelführungen (56) aufweisen, worin Kerben (57) zur Aufnahme der Fallrohrkabel (49) angebracht sind, wobei der Rohrstückgreifer (37) auf der Bewegungsplattform (38) besagte Kerben (57) mit den Fallrohrkabeln (49) fluchtet, indem er seine Nase (43) um seine Achse (EE') dreht.

12. Fallrohr-Montage- und Betriebssystem (6) nach Anspruch 11, **dadurch gekennzeichnet, dass** besagte Kerben (57) zusätzlich mit Haken (58) zum Sichern der Fallrohrkabel (49) in den Kerben (57) versehen sind, wobei die Haken (58) durch den Rohrstückgreifer (37) bedient werden.

13. Fallrohr-Montage- und Betriebssystem (6) nach einem der Ansprüche 10 bis 12, **dadurch gekennzeichnet, dass** die vorgenannten Galgen (46) in Bezug auf das Schiff (1) auf solche Weise rotierbar montiert sind, dass der Abstand (G) zwischen den Fallrohrhebeseilscheiben (55) an jedem Galgen (46) anpassbar ist.

14. Fallrohr-Montage- und Betriebssystem (6) nach einem der vorgenannten Ansprüche, **dadurch gekennzeichnet, dass** es Antriebsmittel (59) umfasst, die mit dem Fallrohr (3) verbindbar sind, durch welche das Fallrohr-Auslassende (60) in Bezug auf das Schiff (1) positioniert wird.

15. Fallrohr-Montage- und Betriebssystem (6) nach Anspruch 14, **dadurch gekennzeichnet, dass** die vorgenannten Antriebsmittel (59) als fernbedientes Fahrzeug ausgeführt sind.

16. Fallrohr-Montage- und Betriebssystem (6) nach Ansprüchen 14 oder 15, **dadurch gekennzeichnet, dass** es mit einer Antriebsmittelhebevorrichtung (62) zum Anheben oder Absenken der vorgenannten Antriebsmittel (59) in Bezug auf das Fallrohr (3) versehen ist.

17. Fallrohr-Montage- und Betriebssystem (6) nach Anspruch 16, **dadurch gekennzeichnet, dass** die Antriebsmittel (59) um das Fallrohr (3) herum angebracht sind und über die Länge des Fallrohrs (3) abwärts oder aufwärts verfahren können, wobei die Antriebsmittelhebevorrichtung (62) zwei Antriebsmittelkabel (63) umfasst, die jedes von einem entsprechenden Galgen (46) gehalten werden, wobei jedes Kabel (63) mit seinem einen Ende auf seine Antriebsmittelwinde (65) gewickelt ist und über eine Antriebsmittelseilscheibe (64) an ihrem entsprechenden Galgen (46) geführt ist, wobei das andere Ende des Antriebsmittelkabels (63) mit den Antriebsmitteln (59) verbunden ist.

18. Fallrohr-Montage- und Betriebssystem (6) nach einem der vorgenannten Ansprüche, **dadurch gekennzeichnet, dass** es einen Rohrstückvorrat (21) umfasst, der auf einem Rohrstückhandhabungsdeck (20) auf dem Schiff (1) vorgesehen ist, wobei die Rohrstückhandhabungsmittel (32) einen Laufkran (33) mit einer Laufkran-Laufkatze (34) umfasst, wobei ein Rohrstückmanipulator (36) unter der Laufkran-Laufkatze (34) montiert ist.

19. Fallrohr-Montage- und Betriebssystem (6) nach Anspruch 18, **dadurch gekennzeichnet, dass** der Bewegungsplattform-Steuermechanismus mit Mitteln zum Koordinieren einer Übergabe eines Rohrstücks (5) zwischen dem Rohrstückmanipulator (36) an dem Laufkran (33) und dem Rohrstückgreifer (37) an der Bewegungsplattform (38) versehen ist.

20. Fallrohr-Montage- und Betriebssystem (6) nach Anspruch 18 oder 19, **dadurch gekennzeichnet, dass** die Rohrstücke (5) im Wesentlichen so gelagert sind, dass ihre Länge (L) sich in eine Richtung (AA') senkrecht zu dem Rohrstückhandhabungsdeck (20) erstreckt, wobei die Laufkran-Laufkatze (34) in einer Ebene parallel zu dem Rohrstückhandhabungsdeck (20) bewegbar ist, zum Transport von Rohrstücken (5) über das Rohrstückhandhabungsdeck (20) von ihrer Lagerposition (21) zu einem Moonpool (4) in dem Schiff (1) und umgekehrt.

21. Fallrohr-Montage- und Betriebssystem (6) nach einem der vorgenannten Ansprüche, **dadurch gekennzeichnet, dass** es mit Zentrierausrüstung versehen ist, um das obere Fallrohrstück (5) in einem Moonpool (4) in dem Schiff (1) zentriert zu halten.

22. Fallrohr-Montage- und Betriebssystem (6) nach Anspruch 21, **dadurch gekennzeichnet, dass** besagte Zentriermittel im Wesentlichen aus vier Fallrohr-Zentrierzylindern (68) bestehen, die gemäß vier Ecken eines Quadrats um den Moonpool (4) angeordnet und zum Zentrum des Moonpools (4) gerichtet sind, wobei jeder Zylinder (68) das Fallrohr (3) mittels eines Seils (69) beweglich mit dem Schiff (1) verbindet.

23. Fallrohr-Montage- und Betriebssystem (6) nach einem der Ansprüche 18 bis 22, **dadurch gekennzeichnet, dass** es mit vollautomatisierten Steuermitteln zur Steuerung des Transports von Rohrstücken (5) von einem Moonpool (4) zum Lagervorrat (21) und umgekehrt, zum Koordinieren der Übergabe zwischen dem Rohrstückmanipulator (36) an dem Laufkran (33) und dem Rohrstückgreifer (37) an der Bewegungsplattform (38), und/oder zum Fluchten des Rohrstückgreifers (37) an der Bewegungsplattform (38) mit der Richtung des oberen Fallrohrstücks (5) versehen ist.

## Revendications

1. Système de montage et d'exploitation d'un tuyau de descente (6) pour le montage et/ou le démontage d'un tuyau de descente (3) qui est constitué par des morceaux de tuyaux rigides (5) disposés en alignement réciproque et à travers lesquels on peut déverser de la roche, des pierres ou n'importe quelle autre matière (2) à partir d'un navire (1) en eau profonde et/ou à utiliser au cours de l'opération d'immersion, le système de montage et d'exploitation du tuyau de descente (6) comprenant un moyen de manipulation de morceaux de tuyau (32) pour le montage ou le démontage de morceaux de tuyaux (5) du tuyau de descente (3), **caractérisé en ce que** le moyen de manipulation de morceaux de tuyaux (32) est monté au moins en partie sur une base mobile (38), ladite base mobile (38) étant montée en mobilité par rapport au navire (1), le mouvement de la base mobile (38) étant commandé par un mécanisme de commande de la base mobile pour compenser les mouvements du navire (1) de telle sorte que lors de l'abaissement d'un morceau de tuyau (5) du tuyau de descente (3) à monter ou bien au cours du levage d'un morceau de tuyau (5) à retirer, le moyen de manipulation de morceaux de tuyaux (32) sur la base mobile (38) est maintenu par le mécanisme de commande de la base mobile en alignement par rapport au morceau de tuyau supérieur (5) du tuyau de descente (3) déjà monté, indépendamment d'au moins les mouvements de tangage et de roulis du navire (1).

2. Système de montage et d'exploitation d'un tuyau de descente (6) selon la revendication 1, **caractérisé en ce que** le moyen de manipulation de morceaux de tuyaux (32) comprend un dispositif de préhension de morceaux de tuyaux (37) qui est monté sur une première partie (39) de la base mobile (38), ladite première partie (30) étant à même d'effectuer des rotations autour d'un premier axe (BB') par rapport à une deuxième partie (40) de la base mobile (38), cette deuxième partie (40) de la base mobile (38) étant à même d'effectuer des rotations autour d'un deuxième axe (DD') par rapport au navire (1).

3. Système de montage et d'exploitation d'un tuyau de descente (6) selon la revendication 2, **caractérisé en ce que** ledit premier axe (BB') et ledit deuxième axe (DD') sont perpendiculaires l'un à l'autre.

4. Système de montage et d'exploitation d'un tuyau de descente (6) selon la revendication 2 ou 3, **caractérisé en ce que** ledit deuxième axe (DD') est parallèle à l'axe longitudinal du navire (1) et **en ce que** la rotation de la deuxième partie (40) de la base mobile (38) autour dudit deuxième axe (DD') est commandée par le mécanisme de commande de la base mobile de telle sorte que le mouvement de roulis du navire (1) est compensé au cours de la mise en alignement susmentionnée du dispositif de préhension de morceaux de tuyaux (37) et du morceau de tuyau supérieur (5) du tuyau de descente (3).

5. Système de montage et d'exploitation d'un tuyau de descente (6) selon les revendications 3 et 4, **caractérisé en ce que** la rotation de la première partie (39) de la base mobile (38) autour dudit premier axe (BB') est commandée par le mécanisme de commande de la base mobile de telle sorte que le mouvement de tangage du navire (1) est compensé au cours de la mise en alignement susmentionnée du dispositif de préhension de morceaux de tuyaux (37) et du morceau de tuyau supérieur (5) du tuyau de descente (3).

6. Système de montage et d'exploitation d'un tuyau de descente (6) selon l'une quelconque des revendications 2 à 5, **caractérisé en ce que** la première partie de la base mobile (38) est une colonne de guidage (39) sur laquelle est monté le dispositif de préhension de morceaux de tuyaux susmentionné (37) en coulissement par rapport à l'axe longitudinal (CC') de ladite colonne de guidage (39).

7. Système de montage et d'exploitation d'un tuyau de descente (6) selon l'une quelconque des revendications 2 à 6, **caractérisé en ce que** la première partie de la base mobile est une colonne de guidage (39) sur laquelle est monté le dispositif de préhension de morceaux de tuyaux susmentionné (37), le dispositif de préhension de morceaux de tuyaux (37) possédant un nez (43) pour saisir un morceau de tuyau (5) afin de prendre le morceau de tuyau (5) à une de ses extrémités, ce nez étant rotatif par rapport au reste du dispositif de préhension de morceaux de tuyaux (37), de telle sorte que l'on peut faire tourner un morceau de tuyau (5) saisi par le dispositif de préhension de morceaux de tuyaux (37) autour de son propre axe longitudinal (EE') qui est disposé en léger décalage (F) par rapport à la colonne de guidage (39).

8. Système de montage et d'exploitation d'un tuyau de descente (6) selon l'une quelconque des revendications 2 à 6, **caractérisé en ce que** la deuxième partie de la base mobile (38) est une table mobile (40).

9. Système de montage et d'exploitation d'un tuyau de descente (6) selon l'une quelconque des revendications précédentes, **caractérisé en ce qu'**il comprend un équipement de levage de tuyau de descente (44) pour soulever ou abaisser la partie du tuyau de descente monté (3).

10. Système de montage et d'exploitation d'un tuyau de descente (6) selon la revendication 9, **caractérisé en ce que** l'équipement de levage du tuyau de descente susmentionné (44) comprend deux potences de chalut (46) montée sur les côtés opposés d'une trappe (4) dans le navire (1), à travers laquelle est monté le tuyau de descente (3), lesdites potences de chalut (46) possédant chacune un câble de tuyau de descente (49), lesdits câbles (49) étant enroulés avec leurs premières extrémités sur leur treuil de stockage (51) et étant guidés par-dessus une poulie de levage de câble de tuyau de descente (55) sur la potence de chalut correspondante (46), les autres extrémités des câbles de tuyaux de descente (49) étant reliées à un élément terminal (50) du tuyau de descente.

11. Système de montage et d'exploitation d'un tuyau de descente (6) selon les revendication 7 et 10, **caractérisé en ce que** les morceaux de tuyaux (5) possèdent des guide-câbles (56) dans lesquels on prévoit des encoches (57) pour la réception des câbles de tuyaux de descente (49), le dispositif de préhension de morceaux de tuyaux (37) sur la base mobile (38) disposant lesdites encoches (57) en alignement avec les câbles de tuyaux de descente (49) par la mise en rotation de son nez (43) autour de son axe (EE').

12. Système de montage et d'exploitation d'un tuyau de descente (6) selon la revendication 11, **caractérisé en ce que** lesdites encoches (57) sont munies en outre de crochets (58) pour fixer les câbles de tuyau de descente (49) dans les encoches (57), les crochets (58) étant actionnés par le dispositif de préhension de morceaux de tuyaux (37).

13. Système de montage et d'exploitation d'un tuyau de descente (6) selon l'une quelconque des revendications 10 à 12, **caractérisé en ce que** les potences de chalut susmentionnées (46) sont montées en rotation par rapport au navire (1) de telle sorte que la distance (G) entre les poulies de levage (55) des câbles de tuyau de descente sur chaque potence de chalut (46) est réglable.

14. Système de montage et d'exploitation d'un tuyau de descente (6) selon l'une quelconque des revendications précédentes, **caractérisé en ce qu'**il comprend des moyens d'entraînement (59) qui peuvent être raccordés au tuyau de descente (3), par lesquels l'extrémité d'immersion du tuyau de descente (60) est positionnée par rapport au navire (1).

15. Système de montage et d'exploitation d'un tuyau de descente (6) selon la revendication 14, **caractérisé en ce que** les moyens d'entraînement susmentionnés (59) sont réalisés sous la forme d'un véhicule actionné à distance.

16. Système de montage et d'exploitation d'un tuyau de descente (6) selon la revendication 14 ou 15, **caractérisé en ce qu'**il est muni d'un dispositif de levage (62) des moyens d'entraînement pour soulever ou abaisser les moyens d'entraînement susmentionnés (59) par rapport au tuyau de descente (3).

17. Système de montage et d'exploitation d'un tuyau de descente (6) selon la revendication 16, **caractérisé en ce que** les moyens d'entraînement 59 sont prévus autour du tuyau de descente 3 et peuvent se déplacer de bas en haut et vice versa sur la longueur du tuyau de descente (3), le dispositif de levage (62) des moyens d'entraînement comprenant deux câbles (63) de moyens d'entraînement, chacun étant maintenu par une potence de chalut correspondante (46), chaque câble (63) étant enroulé avec sa première extrémité sur son treuil de moyens d'entraînement (65) et étant guidé par-dessus une poulie de moyens d'entraînement (64) sur sa potence de chalut correspondante (46), l'autre extrémité du câble de moyens d'entraînement (63) étant raccordée aux moyens d'entraînement (59).

18. Système de montage et d'exploitation d'un tuyau de descente (6) selon l'une quelconque des revendications précédentes, **caractérisé en ce qu'**il comprend un stock de morceaux de tuyaux (21) prévu sur un pont de manipulation de morceaux de tuyaux (20) sur le navire (1), les moyens de manipulation de morceaux de tuyaux (32) comprenant un pont roulant (33) se déplaçant en suspension comportant un chariot mobile de pont roulant (34), un manipulateur de morceaux de tuyaux (36) étant monté en dessous du chariot mobile de pont roulant (34).

19. Système de montage et d'exploitation d'un tuyau de descente (6) selon la revendication 18, **caractérisé en ce que** le mécanisme de commande de la base mobile est muni de moyens pour coordonner un transfert d'un morceau de tuyau (5) entre le manipulateur de morceaux de tuyaux (36) sur le pont mobile (33) se déplaçant en suspension et le dispositif de préhension de morceaux de tuyaux (37) sur la base mobile (38).

20. Système de montage et d'exploitation d'un tuyau de descente (6) selon la revendication 18 ou 19, **caractérisé en ce que** les morceaux de tuyaux (5) sont stockés principalement de telle sorte que leur longueur (L) s'étend dans une direction (AA') perpendiculaire au pont de manipulation de morceaux de tuyaux (20), le chariot mobile de pont roulant (34) étant à même de se déplacer dans un plan parallèle au pont de manipulation de morceaux de tuyaux (20) pour le transport des morceaux de tuyaux (5) par-dessus le pont de manipulation de morceaux de tuyaux (20) depuis leur position de stockage (21) jusqu'à une trappe (4) dans le navire (1) et vice versa.

21. Système de montage et d'exploitation d'un tuyau de descente (6) selon l'une quelconque des revendications précédentes, **caractérisé en ce qu'**il est muni d'un équipement de centrage pour maintenir le morceau supérieur de tuyaux de descente (5) à l'état centré dans une trappe (4) dans le navire (1).

22. Système de montage et d'exploitation d'un tuyau de descente (6) selon la revendication 21, **caractérisé en ce que** ledit moyen de centrage est constitué principalement par quatre cylindres de centrage de tuyau de descente (68) qui sont arrangés conformément aux quatre coins d'un carré autour de la trappe (4) et orientés vers le centre de la trappe (4), chaque cylindre (68) reliant le tuyau de descente (3) au navire (1) en mobilité au moyen d'une corde (69).

23. Système de montage et d'exploitation d'un tuyau de descente (6) selon l'une quelconque des revendications 18 à 22, **caractérisé en ce qu'**il est muni d'un moyen de commande complètement automatisé pour la commande du transport des morceaux de tuyaux (5) à partir d'une trappe (4) jusqu'au stockage (21) et vice versa, pour coordonner le transfert entre le manipulateur de morceaux de tuyaux (36) sur le pont roulant (33) se déplaçant en suspension et le dispositif de préhension de morceaux de tuyaux (37) sur la base mobile (38) et/ou pour la mise en alignement du dispositif de préhension de morceaux de tuyaux (37) sur la base mobile (38) dans la direction du morceau supérieur de tuyau de descente (5).
